# EUROPEAN PATENT APPLICATION

(11) **EP 4 800 583 A1**
(43) Date of publication of application: **02.09.2026**
(21) Application number: 25160950.9
(22) Date of filing: 28.02.2025
(51) Int. Cl.: G06F 21/35, G06Q 30/018, H04L 9/40, H04W 12/06, G06F 16/955, G06F 21/33

(54) **SYSTEM AND METHOD TO ENSURE PERSISTENT AND RELIABLE BINDING BETWEEN A PRODUCT AND PRODUCT-RELATED DATA**

(71) Applicant: Siemens Aktiengesellschaft, 80333 München (DE)
(72) Inventor: Maftun, Aliza, 81247 München (DE); Safieh, Malek, 81539 München (DE); Subrahmanyam, Niranjana, 85540 Haar (DE)
(74) Representative: Siemens Patent Attorneys

(57) **Abstract**

The invention provides for verification of the association an electronic device and a data carrier. The electronic device comprises a housing, a processor, a data storage, and software which are located within the housing and arranged for the software running on the processor and processing data from the data storage. The data carrier is attached to the exterior of the housing or to packaging of the electronic device and comprises readable information for direction to a data repository with information on the electronic device. The verification data are configured for a verification process establishing whether there is a one-to-one correspondence between the electronic device and the data carrier and are arranged to be obtained from the electronic device via a reader device. The inventions forestalls manipulations breaking the association between the electronic device and the data carrier.

## Description

The invention relates to a system comprising an electronic device and a data carrier as well as a method that allows for safer access to product-specific data on a data repository and forestalls manipulatory interventions.

Most industrial products have a data carrier on their packaging, either etched, printed, or glued. These data carriers can be in form of QR codes, bar codes, etc. Data carriers on an industrial product device provide access to device specific information, such as its technical configurations, certifications, etc.

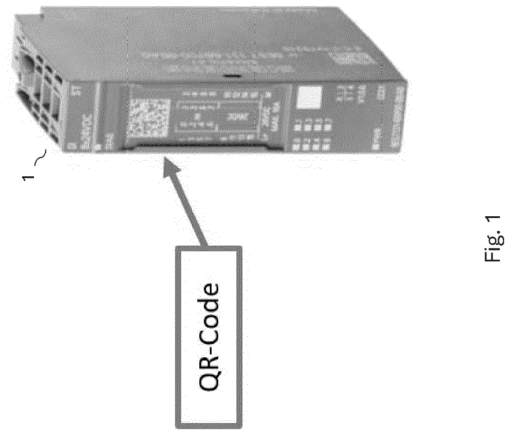

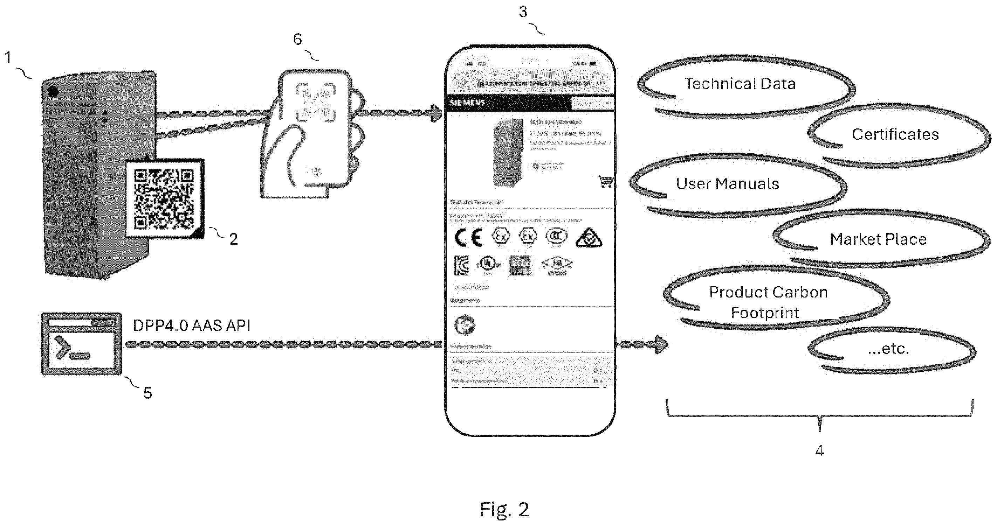

For instance, many of products of the company Siemens also have such a data carrier, called the product passport or digital product passport (DPP). This product passport can be accessed via a QR-code that is etched on the packaging, body, case, or surface of a device 1, as shown in Fig. 1. After scanning the QR-code (for example via a smartphone camera), a link to a browser site is provided, on which device passport information can be accessed. This is shown in more detail in Fig. 2. The device 1 features an QR code 2 which can be used by a mobile device 3 to access a website or data repository 4 with product-specific information. The access is conveyed via specific software, i.e. API 5 that reads the QR-code and interprets the code into a web UR. This API is installed on the mobile device 3. Scanning the QR code via API 5 provides access to the device passport on the data repository 4.

The device passport can comprise various pieces of information regarding the device, such as such as technical data, user manuals, certificates, marketplace content (e.g. software downloads for enhancing device functions), product-specific carbon footprint information etc.

In industrial environments, a major challenge is to forestall counterfeited devices and to ensure a device's authenticity before putting it in operation, or safely integrate it into the customer (trusted) domain. In the case of data carrier-based digital product passports, several attacks are possible, such as:
- the QR code of an original device is copied on a counterfeit device to deceive potential buyers, or
- the original device is fudged with, e.g. by replacing original components with lower quality ones.

There are state of the art procedures meant to counter manipulation. In order to ensure authenticity and integrity of physical documents, physical and digital seals are commonly used. The technical guidelines from BSI (https://www.bsi.bund.de/SharedDocs/Downloads/EN/BSI/Publications/TechGuidelines/TR0313 7/BSI-TR-03137_Part1.pdf) provide guidance regarding usage of asymmetric cryptography for encoding a documents detail, creating a digital reference of the document that is signed and encoding it into a machine-readable barcode that can be printed or attached on the final document. The integrity of the document's content can be checked using an optical reader to verify that the content is identical to the one that is signed in the digital reference. This approach can be used for several known use cases including checking authenticity and integrity of travel documents, membership cards, visitor badges, etc. as shown by the solution provided by https://vds-nc.com/. However, this approach is so far limited to documents only and not leveraged in industrial domains.

Many hardware product manufacturers also use the concept of serialized QR codes on their products and track the number of times a product is scanned. When a specific QR code is scanned frequently, they suspect it to be copied on counterfeited devices and inform the customers via the URL linked to the QR code. There are also some QR code printing techniques to embed some security features in the QR code that makes them copy-protected (https://www.scantrust.com/secure-qr-code-anti-counterfeiting-solutions/). These QR codes can be used to identify fake devices. Similarly, for some luxury products, seals (https://prooftag.net/en/solutions-for-brands/wine-spirits/, https://www.sicpa.com/expertise/currency) of special material/ink are used to identify modifications to the product, but such seals and QR-codes cannot be commonly used in the industrial domain because of prohibitively high costs and also because they won't help against software modification, addition of backdoors, etc.

Standard ISO/IEC 20248:2018 specifies a method for structuring, encoding, and digitally signing data stored within barcodes (including QR codes) and RFID tags. Thus, a digital signature stored in a QR code, or near-field communications (NFC) RFID tag can be easily read and verified using a smartphone with an ISO/IEC 20248-compliant application. The product owner who generates the digital signature is also responsible for publishing the corresponding certificate. Any relying party application retrieves the appropriate certificate from the owner, after which it can verify all signatures generated with that certificate (even offline). The signature verification proves that the data encoded indeed comes from the product owner. The above-mentioned standard applies to a wide range of use cases including safeguarding number plates, wind shield labels (WSL) for motor vehicles, head lamp tags (HLT) for motorcycles, and many other electronic vehicle identification industry solutions (see https://truevolve.com/idoffline/) in addition to its employment in the pharma industry to enhance traceability of medicines in the form of RAIN RFID tags (https://rainrfid.org/healthcare/).

The invention aims at strengthening protection against manipulations such as mentioned before.

Better protection offered by the invention is directed to a system, comprising an electronic device and a data carrier. For instance, the electronic device may be some industrial device which is powered by connecting it to an electric circuit. It is assumed that the electronic device comprises a housing, a processor, a data storage, and software (e.g. firmware). The processor, the data storage, and the software are located within the housing and arranged so that the software is running on the processor and processing data from the data storage. The term "processor" is to be understood to comprise any HW computing entity to automatically perform calculations including a CPU and an MCU.

The data carrier (e.g. a QR code, a bar code, or a serial number) is attached to the exterior of the housing or to packaging of the electronic device and comprises readable information for direction to a data repository with information on the electronic device (e.g., device passport).

The electronic device further comprises verification data configured for a verification process that establishes whether there is a one-to-one correspondence between the electronic device and the data carrier, the verification data being arranged so that they can be obtained from the electronic device e.g. via a reader device. This reader device may be based on a physical connector (e.g., connection is assured via a USB interface of the device) or an NFC antenna. In the latter case, a smartphone with NFC reader functionality or a QR code reader are options. Tt would also be possible to have a device with a display or screen. In this case the device is arranged to display the verification data on the screen for the user. In this embodiment no reader device would be needed.

The verification process may involve a trusted digital authentication authority, such as an authentication manager which may come in the form of a trusted remote party. The verification data may comprise an OTP (one-time-password) token. Such an OTP token can be provided by a list or be generated using a pre-stored unique secret key. As an alternative to an OTP-based verification, the verification process may be based on a public-private key pair, too. In this embodiment, the verification data may be generated by applying the private key to data (e.g., a nonce) provided from outside the electronic device and the verification process may entail applying the public key to the verification data. For an additional check, the data carrier may comprise information encoded with a device-specific trusted document, e.g. a public key certificate that can be provided as a certificate extension. The additional check would be performed by the authentication manager e.g. via the corresponding public key.

According to an embodiment, the verification process is designed to be triggered by a user action. Triggering by either reading the data carrier (e.g., scanning an QR code) or by pushing a button provided by the data repository to a relying party device are examples.

According to an embodiment, verification is predicated on a time threshold for the time expired between events related to the verification process, e.g., reading the data carrier, triggering the verification process, issuance of the verification data, completion of the verification process, etc. This embodiment may involve use of timestamps and a suitable clock.

According to an embodiment, the data carrier is provided with protection that impedes copying which can be e.g. implemented by help of overlay techniques.

According to an embodiment of the invention, the system comprises a chip (typically a smart chip or some chip based on RFID technology) that preferably is powered by a second source of power, typically battery operated and therefore may be powered on even without booting or powering on the main device. The chip is located in the interior of the housing (i.e. integrated in the electronic device) and comprises the verification data (in a suitable memory) or is enabled to generate the verification data. The chip is designed and arranged in the housing for the verification data to be read from outside the housing with the reader device independent of any processor operations. In particular, no booting of the electronic device is necessary to access the verification data.

According to an alternative embodiment, the data storage comprises the verification data or the processor is configured to generate the verification data. Preferably, the verification data are stored in a protected part of the storage. According to this embodiment, the electronic device comprises a display that is operable to display the verification data thereon.

The invention covers a system as described above further comprising the data repository, e.g., an internet data repository. In this embodiment, the data repository is augmented for supporting the verification process and may comprise a DPP (digital device passport) of the electronic device.

The invention also covers a method for verification whether there is a one-to-one correspondence between the electronic device and the data carrier of a system according to the invention. This method comprises the steps of reading the data carrier, accessing the data repository based on direction information read from the data carrier, reading the verification data, and conducting the verification process on the basis of the verification data by help of an authentication manager (e.g., trusted digital authentication authority). After accessing the data repository, the verification process may be triggered by the reading of the data carrier or by pressing a button provided by the data repository on a relying party device. For instance, the verification data include a one-time-password (OTP) which is to be entered into a relying party device for triggering the verification process.

According to one embodiment of the method, the verification process is based on a public-private key pair, the verification data is generated by applying the private key to data (such as a nonce) provided from outside the electronic device, and the verification process comprises applying the public key to the verification data where the public key may be provided by the data repository.

According to an embodiment of the method, the public key is encoded in the data carrier, extracted from the data carrier, and used to decode a nonce signed with the private key.

The present invention addresses possible attacks mentioned in the introduction by binding the device content/components to its corresponding data carrier. This approach could be used for any product, independent of the nature of its content, components, or the data carrier form. Identification of counterfeit, cloned, or manipulated devices becomes possible.

Below, embodiments of the invention is explained with reference to figures. The figures show
Fig. 1: an example for a product provided with a QR-code,
Fig. 2: a method for accessing a device passport on a browser site, after scanning the QR-Code on the device's body,
Fig. 3: a method for verification that a device and a QR code on the device are bound to each other by help of a smart chip embedded in the device for binding it to its DPP,
Fig. 4: a method for verification that a device and a QR code on the device are bound to each other that is based on an OTP,
Fig. 5: a method for verification that a device and a QR code on the device are bound to each other that is based on a nonce, and
Fig. 6: a method for verification that a device and a QR code on the device are bound to each other that is based on an asymmetric key pair.

The present invention comprises multiple concepts that aim to persistently bind the device and its corresponding data carrier (QR codes, bar codes, etc.), so that the data carrier cannot be copied to a counterfeit device, at least not without being recognized. The below embodiments assume that the device's data (i.e., its passport) can be accessed via QR-code placed on the outside of the device and provide some protection mechanism for relevant Devices' Digital Product Passport (DPP) use-cases. However, the proposed concepts are suitable for any other form of the data carrier as well.

Below two different embodiments are presented in more detail. The first one focusses on proving the authenticity of the device without booting it, which for instance is well suited for supply chain applications where the devices' authenticity must be verified before they are sold or put in operation.

The second embodiment allows for manual inspection of device specific information and identifiers. However, for a device's internal proof of authenticity, the device must be booted. The concept of the second embodiment is in particular useful to check the device's authenticity after the first booting of a newly purchased device, i.e., before performing a device onboarding protocol like BRSKI (Refer to: https://datatracker.ietf.org/doc/rfc8995/) and integrating the device into the trusted customer domain.

The first embodiment envisages a device authenticity check without booting the device. Considering the available DPP infrastructure, the following extensions are provided to support the new and innovative features of this embodiment:
1. An industrial device (for example the device shown in Fig. 1) is equipped with an internal (i.e. not accessible from outside the device) dedicated smart chip. That is, such chips are integrated in the device. They are designed and configured so that they are difficult to clone, to remove, or to be replicated on other devices. Their purpose is the ensure the authenticity and integrity of the device.
2. Moreover, in addition to the device used to scan QR-codes, another reader means is provided that enables physical or contactless communication with the smart chip, like a simple physical connector or an NFC antenna (nowadays, many smartphones are equipped with built-in NFC chip to support NFC-reader feature. The same smartphone can also be used to scan the QR-code on the device as well).
3. The DPP (digital product passport) is enhanced with additional functionality or/and information to provide protection in line with the inventive concept. It should be noted that even if the DPP functionalities are extended in the present embodiment, the inventive concept can yet be applied as a stand-alone technology, i.e., independent of any DPP framework as well.

The main propose of this concept is to bind the QR-code to the device interior using the integrated smart chip. A relaying party or user can simply scan the bar code and communicate with the device internal chip, which generates a proof for the device authenticity, i.e. proof that the device was originally assigned the QR-code. This proof is then verified by a trusted remote party (authentication manager). In this way, it is impossible for an attacker to manipulate the QR-code placed on the body of the device, without attacking the smart chip internally integrated into the device. A key feature of this embodiment is that this verification process or authenticity proof can be enacted without booting the device, which is particularly suitable for a bunch of applications, e.g., related to supply chains.

To illustrate aspects of the invention, two examples for applications that follow similar but slightly different concepts are set out below.

### Example 1:

The smart chip proof is based on a one-time password (OTP) token using a pre-stored device-specific unique secret key. The OTP is generated using time-based methods and should follow "Time-based one-time password" (TOTP) (see RFC 6238 https://datatracker.ietf.org/doc/html/rfc6238). Furthermore, the embedded smart chip, apart from the token application and the secret key, can also have an oscillator for the purpose of running a real-time clock in it and be completely battery powered. Alternatively, a timestamp could be generated from the reader device and sent as an input to the smart chip instead of running oscillator in the smart chip. TOTP algorithms typically require two parameters to generate the OTP:
1. a shared secret (key) between device and a validation server
2. current time interval (e.g., 30 seconds) counted as time interval from beginning of UNIX time until current time divided by 30 second intervals. This time interval or timer mainly serves to assure promptness and serves as protection against replay-attacks. It can be generated on the smart chip by an oscillator or externally by the reader and sent to the smart chip, as mentioned above.

The device (smart chip) processes this value according to the TOTP algorithm and generates for example a 6-digit OTP. On the other hand, the authentication manager (or server/remote party) requires the same two parameters, i.e. current time interval and secret to verify the generated OTP. Thus, the time interval can be locally generated by the authentication manager, however, the secret should be known and pre-shared (e.g., the authentication manager could access a list of product unique IDs and corresponding secrets for this purpose).

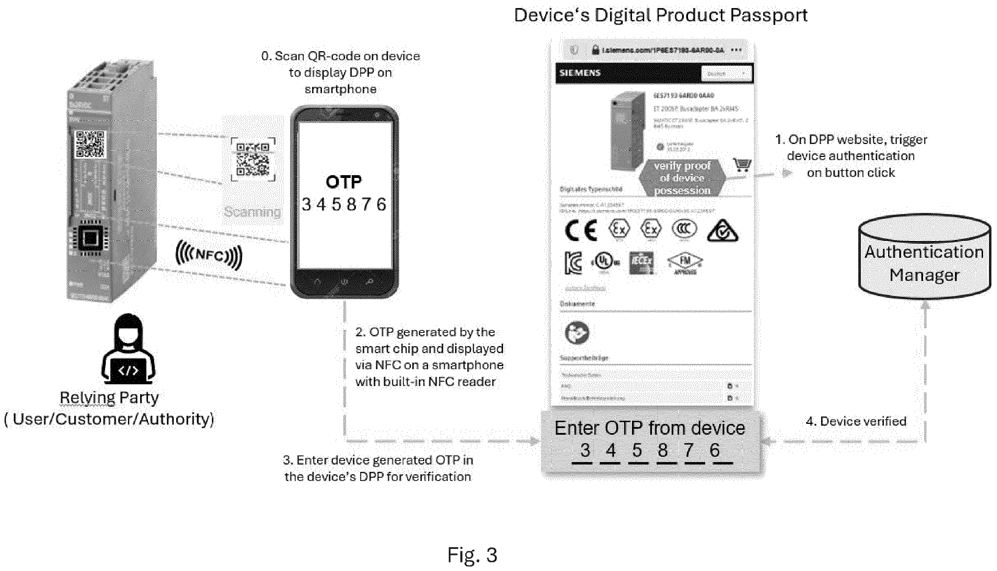

In this way, a trusted smart chip would aid the relying party in proving that the device's digital product passport indeed is bound to the device at-hand in the following way (also see Fig. 3):
1. The manufacturer integrates a smart chip in the industrial device with a smart chip that includes a TOTP algorithm and can generate time-based OTPs. The manufacturer also ensures that the chip has a secret that is also known to (or pre-shared with) the authentication manager service at his backend and the time intervals are correctly defined and pre-set.
2. A relying party in possession of the industrial device, like a user or authority, uses a smartphone or QR-code scanner to scan the QR-code and views the digital product passport of the device, which directs the relying party to the DPP website, specific to this device.
3. According to this embodiment, the DPP website provides an additional button called for example "verify proof of device possession" for verifying if he/she possesses the genuine/original device that matches with one of record at the displayed DPP website.
4. If the relying party now clicks the "verify proof of device possession" button. This will trigger a prompt asking the user to hold an NFC reader close to the industrial device to receive an OTP on the reader. This is followed for example by a pop-up screen on the DPP website for the relying party (e.g., the user) to enter the OTP displayed on the reader.
5. The relying party uses the NFC reader to communicate with the smart chip and to retrieve the generated OTP (in case the current time is needed as an input for the smart chip, it is generated by the reader and sent to the smart chip in this step).
6. the OTP is entered in the DPP pop-up screen which triggers verification via the authentication manager service running at the manufacturer's backend.
7. A successful verification is performed by the authentication manager by comparing the OTP with the expected value and communicated to the DPP system.

As a result, the relying party can be certain that the device and the QR code match with each other, i.e., the displayed DPP web page is indeed the one for the device in his possession, or, seen from a different angle, the QR code was originally assigned to the device.

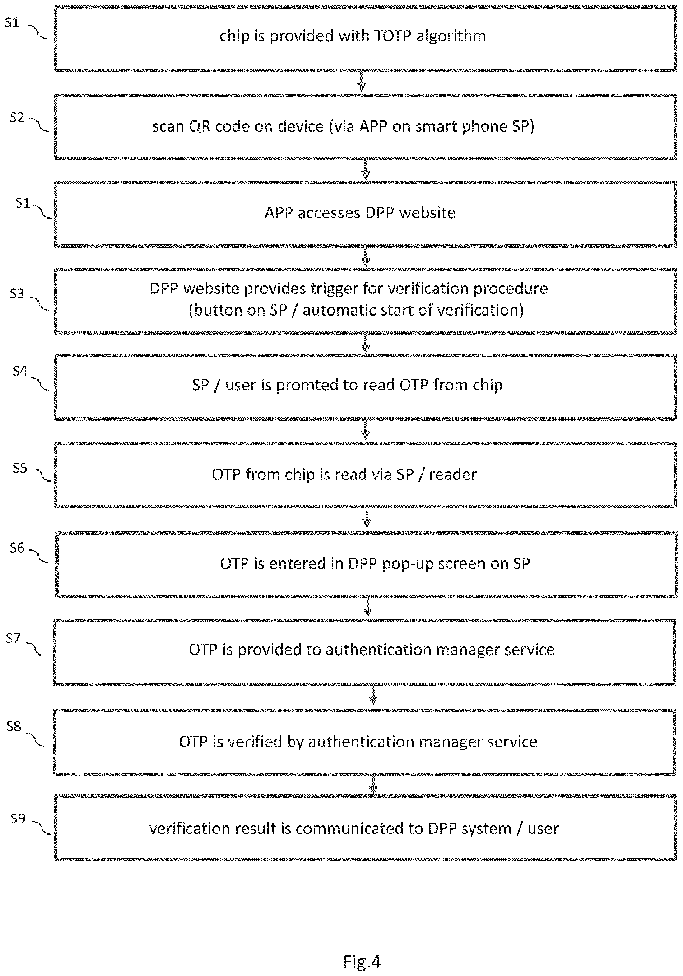

Fig. 4 shows a flow chart for such a method which comprises the steps of:

| | |
|---|---|
| S1: | The chip is provided with TOTP algorithm. |
| S2: | The user scans the QR code on the device (e.g., via an APP on his smart phone SP). |
| S3: | The APP accesses the DPP website. |
| S4: | The DPP website provides a trigger for the verification procedure such as a button on SP or an automatic start of the verification. |
| S5: | The SP or user is prompted to read an OTP from the chip. |
| S6: | The OTP from the chip is read via SP or some other reader device. |
| S7: | The OTP is entered in a DPP pop-up screen on the SP. |
| S8: | The OTP is provided to an authentication manager service. |
| S9: | The verification result is communicated to the DPP system and/or the user. |

Remarks:
- For a consistent security level and full protection during the procedure the communication between the relying party and the authentication manager should be protected, e.g., using TLS/SSH and a PKI.
- In an embodiment, the relying party directly displays the DPP (pop-up) and the device authenticity checks are triggered subsequently, as described above.
- The proposed concept can be applied with any other mechanism that provides an authenticity proof procedure, i.e., it is not necessarily restricted to OTP and TOTP.
- In a different embodiment, "verify proof of device possession" button is not provided by the DPP. Instead, the integrity check should directly start after scanning the QR-code, in the same way as described above.

An extension of the inventive concept for a powered-on device is set out below.

TOTP token generation application can also be applied in absence of a smart chip integrated into the device. The TOTP token application can be made available on the industrial device as a system application or as part of the manufacturer's firmware in conjunction with a user interface to display the generated OTP (instead of broadcasting via NFC) on the device to enable performing a check whether the DPP directed by the QR-code on the body of the device matches the device in operation. The secret required for the TOTP in this case can be provided at the device in a secure memory region accessible only by the TOTP system application.

### Example 2:

Example 1 is based on a pre-shared secret between the authentication manager and the smart chip. In the below example, the authentication is based on a similar but slightly different functionality of smart cards. Instead of a pre-shared secret, a smart chip possesses a public-private key pair (like a smart card), where the public key is certified by a certificate authority (CA) in some public key infrastructure (PKI).

In this case, instead of an OTP as in example 1, other asymmetric cryptographic algorithms can be used to provide the proof. In the following, a possible concept is described that is based on asymmetric cryptography for the proof of authenticity. Differences compared with the process steps in the example 1 are as follows:
In step 1, the manufacturer integrates a smart chip into the industrial device with the smart chip comprising an asymmetric key pair and some asymmetric cryptographic functions. The manufacturer also ensures that the public key of this smart chip is certified by a trusted CA and available to the authentication manager service at his backend.

In step 4, after clicking on the "verify proof of device possession" button, the relying authority (e.g., the user) is prompted to hold the NFC Reader/his smartphone close to the device. The NFC reader establishes a secure connection (e.g., using SSH/TLS) with the authentication manager service. A nonce is generated at the authentication manager and sent to the smart chip via reader. The smart chip signs it with its own private key. Consequently, the reader receives the signed nonce and forwards it to the authentication manager.

In the next step, the authentication manager performs a certificate chain validation up to the root certificate. After successful validation, the authentication manager verifies the signature over the nonce and thus establishes device authenticity by binding the device signature to a key within the device. That way, the binding of DPP to the corresponding device is also verified. Note that the authentication manager can also bind the QR-Code with the public key of this device that is used for the signature validation e.g., by encoding the certificate in the QR-code. Thereby, the authentication manager can additionally check that the QR-code indistinguishably belongs to this device (holding the corresponding private key in its smart chip).

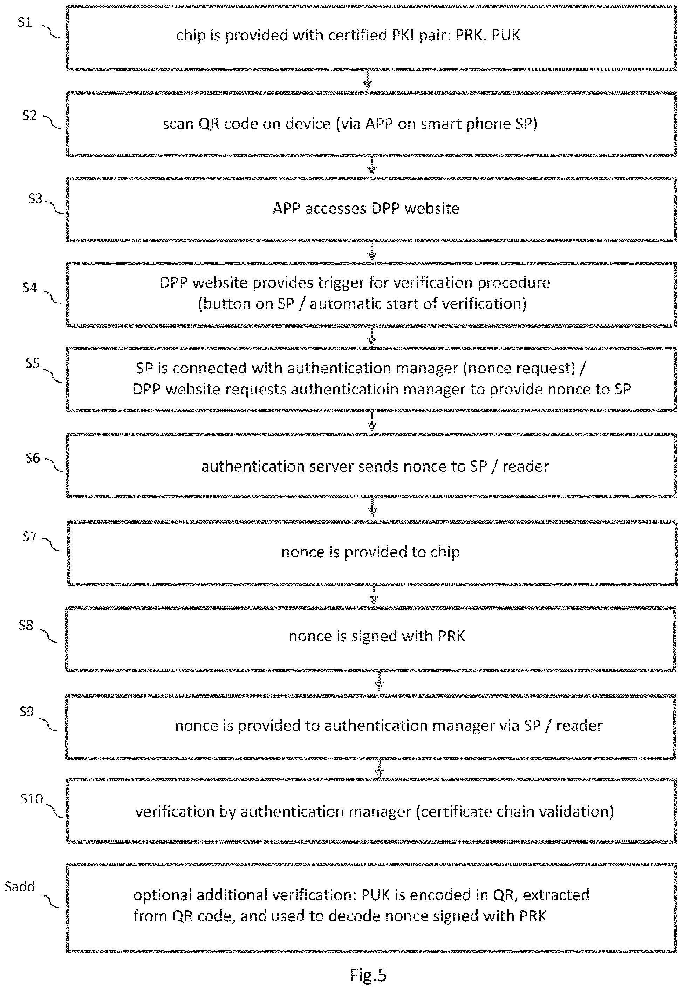

Fig. 5 shows a flow chart for such a method which comprises the steps of:

| | |
|---|---|
| S1: | The chip is provided with certified PKI pair consisting of private key PRK and public key PUK. |
| S2: | The user scans the QR code on the device (via an APP on the smart phone SP). |
| S3: | The APP accesses the DPP website. |
| S4: | The DPP website provides a trigger for the verification procedure such as a button on the SP or an automatic start of the verification. |
| S5: | The SP connects to the authentication manager and sends a nonce request or the DPP website requests the authentication manager to provide a nonce to the SP. |
| S6: | The authentication server sends a nonce to the SP or some other reader device (possibly via the SP). |
| S7: | The nonce is provided to the chip. |
| S8: | The nonce is signed with the private key PRK. |
| S9: | The nonce is provided to the authentication manager via the SP or the reader device. |
| S10: | Verification is conducted by the authentication manager (certificate chain validation). |

As an option an additional verification is performed in step Sadd.

Sadd:The public key PUK is encoded in the QR code, extracted from the read QR code, and
used to decode a nonce signed with the private key PRK.

Alternative implementations and remarks:
- In a different embodiment, "verify proof of device possession" button is not provided in the DPP environment. Instead, the authenticity check should directly start after scanning the QR-code, in the same way as described above.

Advantages of the above embodiment (all examples)
- The approach involves no external power for the smart chip (just like smart cards or credit cards). Therefore, an industrial device doesn't require a boot-up as a precondition for the verification, i.e., for ascertaining that the DPP matches the device. Any regulatory authority, like customs officials, can simply scan the device from outside in order to assess if the DPP website corresponds to the device at hand.
- Also, the generated OTP can be sent as a broadcast message via NFC (near field communications) to any NFC reader. No secure communication is required between the reader and the smart chip as intercepting the OTP and inputting the value on the DPP website within the 30-second interval would not harm the device or the DPP system. The value could merely be used to know if the device that generated it is in the user's vicinity.

Caveats of the above approach (all examples):
- For the embodiment with on chip oscillators, state-of-the art smart chips may run out of battery life within four years. As this type of external scanning for checking the DPP with the device is needed only before the device is put into operation, the low battery life of under four years may not be a problem. If a longer lifetime was imperative, one could consider providing the smart chip with an additional energy source that is charged from the power supply of the industrial device (e.g., accumulator) and with a mechanism to switch to the additional energy source as needed.
- Oscillators used for real-time clocking (either by on the smart chip or by the reader) are subjects to time drift after a period. Therefore, this time-drift should be considered while setting up the authentication manager especially if such clocks do not have possibility of resynchronization with online time servers.

### Further embodiment:

The approach according to embodiment 2 introduces a modification of the DPP with a device authenticity check functionality, which can be proven only after booting the device (i.e., after the first boot). Such functionality is beneficial for many applications, e.g., to check the authenticity of the device before performing a device onboarding protocol.

Upon scanning the QR-code on the device, the user is directed to a website which displays the device's digital product passport (as shown in Fig. 1). The digital product passport could include inter alia information such as device unique identifiers like instance number, UUIDs, MAC addresses, etc., which are shown on the body of the device separate from the QR-code. Thus, without booting the device, authorities or relying parties could perform a manual/visual inspection, read these device identifiers and correlate them with the DPP information to see whether if the device is genuine. Preferably, special overlay techniques were applied to the QR-code that allow for verifying that the QR-code etched on an industrial product is genuine, e.g. microtexts on a QR-code, holographic overlays, special inks or watermarks which are all state-of-the-art methods serving this purpose. Such techniques introduce multiple levels of protection, making it difficult or impossible to duplicate the QR code.

Since identifiers visible on the body of a device (or generally not protected) are always a subject of copying, a device with (additional) internal proof of authenticity provides a stronger protection against manipulation. Internal proof according to the present embodiment requires booting of the device. In the following, we present an example that demonstrates the authenticity proof after booting the device, before starting a device-onboarding protocol like BRSKI (Refer: https://datatracker.ietf.org/doc/rfc8995/) and integrating it into the trusted customer domain.

After scanning the QR-code on the device (as shown in Fig. 1), a link to a website can be accessed, where the DPP is shown.

Preferably, the public key certificate of the device (or end-entity-certificate, issued by some certificate authority (CA) trusted by Siemens) is included in the device passport. The device's origin may be verified by executing following steps:
1. The user receives the device, scans the QR-code on the device's body, accesses the corresponding DPP website, and extracts the device's public key certificate (added according to the device passport according to the present embodiment).
2. The user can try to validate the certificate chain up to the root certificate to ensure that the public key certificate of this device is issued by a trusted CA.
3. Next, the user turns the device on and triggers it to sign an arbitrary message (e.g., a simple "hello world" message). Alternatively, this functionality can be done (zero-touched) automatically, i.e., the device can be implemented and configured such that an arbitrary message is signed (with the devices private key) after each boot process of the device, before successfully putting it into operation or as a prerequisite of an operational state. Note that depending on the use-case, the device may be returned to this configuration again after a factory reset, i.e. a signed message is generated when booting after a reset.
4. Verification by the user is performed by verifying the signature via the public key given in the public key certificate extracted from the corresponding device passport, which was accessed after scanning the QR-code on the device. If the signature verification was successful, the user can be sure that this device is the original one that was produced by the manufacturer and certified by a trusted CA.

Alternative implementations and remarks:
- In a more secure version of the present embodiment, the arbitrary message (like "hello world") is replaced by a nonce that is randomly generated by the user and sent to the device. The nonce is then signed with the device's private key and sent back to the user. Thereupon, the user can check if the correct nonce is signed, before validating the signature with the corresponding public key available in the certificate (available in the DDP). This version of the embodiment resists replay attacks.
- In a different version of the present embodiment, the QR-code (or the corresponding device ID linked into it and shown on the devices' body) is included as an extension in the public key certificate of the device issued from some trusted CA, e.g., as an X.509 certificate extension. The user can, for example, scan the QR-code on the device's body, accesses the corresponding device passport, extracts the device's public key certificate and just check whether the added certificate extension matches the QR-code (or the device ID linked into it) that is located on the devices body.
- It should be noted that this embodiment offers several checks and options. However, a crucial part of the verification requires that the device is turned on and booted, since the device's private key needs to be used, which provides a device-internal proof that the private key belongs to the public key certificate of this device. This public key certificate is linked by the QR-code located on the body of this device.

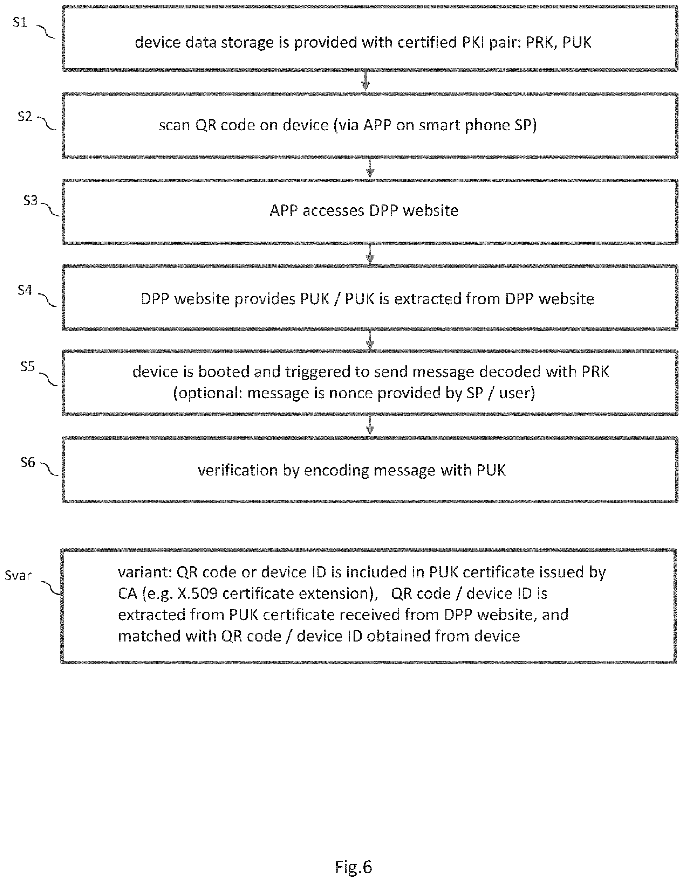

Fig. 6 shows a flow chart for a method according to the present embodiment with following steps:

| | |
|---|---|
| S1: | The device data storage is provided with a certified PKI pair comprising a private key PRK and a public key PUK. |
| S2: | The user scans the QR code on his device (via APP on smart phone SP). |
| S3: | The APP provides access to the DPP website. |
| S4: | The DPP website provides the public key PUK (automatically) or the public key is PUK is extracted from the DPP website by the user. |
| S5: | The device is booted and triggered to send a message encoded with the private key PRK. The message may be a nonce provided by the user via his smart phone SP. |
| S6: | The verification is done by decoding the message with the public key PUK. |

A variant is provided in step Svar:
Svar: The QR code or device ID is included in PUK certificate issued by CA (e.g. X.509 certificate extension), extracted from the PUK certificate when it is received from the DPP website, and matched with the QR code or device ID obtained from the device.

The invention and its embodiments described above can be applied to any products, including industrial loT devices. They ensure a persistent and reliable binding between a device and its corresponding information, especially in form of its digital product passport. With the help of the invention, authenticity of a product and its information can be verified along its entire lifecycle.

## Claims

**1.** A system, comprising an electronic device and a data carrier,
wherein
- the electronic device comprises a housing, a processor, a data storage, and software;
- the processor, the data storage, and the software are located within the housing and arranged for the software running on the processor and processing data from the data storage;
- the data carrier is attached to the exterior of the housing or to packaging of the electronic device;
- the data carrier comprises readable information for direction to a data repository with information on the electronic device; and
- verification data that are configured for a verification process establishing whether there is a one-to-one correspondence between the electronic device and the data carrier and that are arranged to be obtained from the electronic device.

**2.** System of claim 1, wherein
the verification data are arranged to be obtained from the electronic device via a reader device or visually via a screen.

**3.** The system of claim 1 or 2, wherein
the carrier is a QR code, a bar code, or a serial number

**4.** The system of one of the claims 1 to 3, further comprising a chip,
wherein the chip
- is located in the interior of the housing;
- comprises the verification data or is enabled to generate the verification data; and
- is designed and arranged in the housing for the verification data to be read from outside the housing with the reader device independent of any processor operations.

**5.** The system of claim 1 to 4, wherein
- the data storage comprises the verification data or the processor is configured to generate the verification data; and
- the electronic device comprises a display that is operable to display the verification data thereon.

**6.** The system of one of the claims 1 to 5, wherein
the reader is based on a physical connector or an NFC antenna.

**7.** The system of one of the claims 1 to 6, wherein
the verification process involves a trusted digital authentication authority.

**8.** The system of one of the claims 1 to 7, wherein
the verification data comprise an OTP token.

**9.** The system of one of the claims 1 to 7, wherein
- the verification process is based on a public-private key pair;
- the verification data is generated by applying the private key to data to be provided from outside the electronic device; and
- the verification process comprises applying the public key to the verification data.

**10.** The system of claim 9, wherein
the data carrier comprises information encoded with a device-specific trusted document.

**11.** The system of one of the claims 1 to 10, wherein
verification is predicated on a time threshold for the time expired between events related to the verification process.

**12.** The system of one of the claims 1 to 11, wherein
the data carrier is provided with protection that impedes copying.

**13.** The system of one of the claims 1 to 12, further comprising the data repository, wherein the data repository is augmented for supporting the verification process.

**14.** The system of one of the claims 1 to 13, wherein
the verification process is designed to be triggered by a user action.

**15.** The system of one of the claims 1 to 14, wherein
the verification process is triggered either by reading the data carrier or by pushing a button provided by the data repository to a relying party device.

**16.** The system of one of the claims 1 to 15, wherein
the data repository comprises a digital product passport of the electronic device.

**17.** A method for verification whether there is a one-to-one correspondence between the electronic device and the data carrier of a system of one of the claims 1 to 16, comprising the steps of
- reading the data carrier;
- accessing the data repository based on direction information read from the date carrier;
- reading the verification data
- conducting the verification process on the basis of the verification data by help of an authentication manager.

**18.** The method of claim 17, wherein
the verification process is triggered by the reading of the data carrier or by pressing a button provided by the data repository on a relying party device upon accessing the data repository based on direction information read from the date carrier.

**17.** The method of one of the claims 15 or 16, wherein
the verification data include a one-time-password OTP which is to be entered into a relying party device for triggering the verification process.

**18.** The method of one of the claims 15 or 16, wherein
- the verification process is based on a public-private key pair;
- the verification data is generated by applying the private key to data provided from outside the electronic device; and
- the verification process comprises applying the public key to the verification data.

**19.** The method of claim 18, wherein
the public key is provided by the data repository.

**20.** The method of claim 18 or 19, wherein
the data provided from outside the electronic device comprise a freshness number such as a nonce, a random number, or a timestamp

**21.** The method of one of the claims 18 to 20, wherein
the public key is encoded in the data carrier, extracted from the data carrier, and used to decode a nonce signed with the private key.
